# EUROPÄISCHE PATENTANMELDUNG

(11) **EP 1 894 816 A2**
(43) Veröffentlichungstag der Anmeldung: **05.03.2008**
(21) Anmeldenummer: 07115388.6
(22) Anmeldetag: 31.08.2007
(51) Int. Cl.: B62D 7/18, C25D 3/22, C25D 7/10, C25D 11/38, C25D 15/02

(54) **Schwenklager für Automobil-Vorderradaufhängungen**

(30) Priorität: 01.09.2006 DE 202006013555 U
(71) Anmelder: Zeschky Galvanik GMBH & Co.KG, 58300 Wetter (DE)
(72) Erfinder: Zweibäumer, Klaus, 58300 Wetter (DE)
(74) Vertreter: Gille Hrabal Struck Neidlein Prop Roos

(57) **Zusammenfassung**

Schwenklager für Automobil-Vorderradaufhängungen, bestehend aus verzinktem Grauguss, welches Sacklöcher, Bohrungen und/oder Gewindebohrungen aufweist, dadurch gekennzeichnet, dass die ZinkBeschichtung im wesentlichen kristallin ist,

## Beschreibung

Die vorliegende Erfindung betrifft ein Schwenklager für Automobil-Vorderradaufhängungen und ein Verfahren zu dessen Herstellung,

Schwenklager dienen zur Vorderradbefestigung bei Automobilen und befinden sich im direkten Spritzwassereinwirkung ausgesetzten Bereich. Sie weisen Durchbohrungen, Sacklöcher und/oder Gewindebohrungen auf, die z.B. zur Aufnahme des ABS-Sensors, des Radlagers und anderes dienen.

Schwenklager werden im allgemeinen aus Grauguss hergestellt, der üblicherweise vor der mechanischen Bearbeitung zur Herstellungen der Sacklöcher, Bohrungen und/oder Gewindebohrungen lackiert wird. Im Anschluss an die mechanische Bearbeitung sind die Sacklöcher, Bohrungen und Gewindebohrungen sowie die daran angrenzenden planen Bereiche des Schwenklagers dementsprechend blank, d.h. die Oberfläche ist ungeschützt, da die Lackierung zwangsläufig durch die mechanische Bearbeitung in diesen Bereichen entfernt wird. Es tritt dann an den unlackierten Oberflächen häufig Rotrost auf, der zu unschönen Rostflecken und Rostablagerungen und dadurch zu Beeinträchtigungen der Funktion des Bauteils führt, die die Qualität des gesamten Automobils beeinträchtigen.

Dieses Problem versuchte man zu lösen, indem statt der Lackierung nach der mechanischen Bearbeitung eine galvanische Beschichtung auf den Grauguss aufgebracht wurde. Üblicherweise wird hierfür eine Zink-Nickel- oder Zink-Eisen-Beschichtung galvanisch aufgebracht. Solche Beschichtungen werden in der Regel aus alkalischen Galvanisierungsbädern abgeschieden, Als Gegenbeispiel kann http://www,dmk-plating,com/deutsch/produkte/DMK-Prozesse-DE.pdf herangezogen werden. Wegen der zeitverzögerten Unterkorrosion, die bei derartigen alkalisch abgeschiedenen Beschichtungen auftritt, muss daher zuvor eine Zinkschicht aus einem sauren Elektrolyten aufgebracht werden. Diese zweistufige Verfahren ist daher dementsprechend aufwendig und teuer,

Das galvanische Beschichten und insbesondere das Verzinken von Grauguss ist generell häufig problematisch. Produktionsbedingt befinden sich in der Gussoberfläche Poren, Kavernen, Unterschneidungen usw. Diese Oberflächendefekte füllen sich bei den verschiedenen Behandlungsschritten mit alkalischen bzw, sauren Vorbehandlungs-Medien, und diese werden beim Verzinken zum Teil eingeschlossen, Je nach Porenvolumen kann sich das eingeschlossene aggressive Medium dann z.T. innerhalb weniger Stunden oder Tage durch die frisch abgeschiedenen Zinkschicht fressen, und es kommt zu Ausblühungen (Weißrost) an der Oberfläche. Bei Zinkschichten aus alkalischen Medien tritt dieses Problem stärker in Erscheinung. Allein der Wechsel zu sauren Abscheidungsmedien führt aber nicht zum gewünschten Erfolg. Um wirklich einwandfreie Oberflächen zu erzielen, muss insbesondere die Vorbehandlung optimiert werden, wobei insbesondere aggressives Beizen ohne Beizinhibitor empfohlen wird, um die Poren zumindest insoweit aufzuweiten, dass keine Elektrolyteinschlüsse mehr auftreten (http://forum.surtec.com/Beitrag.php?lang=en&domain=3&position=0 &entrylD = 14),

Es sind mehrere Verfahren zur Feuerverzinkung von Gusseisen bekannt, d.h. durch Beschichten mit geschmolzenem Zink.

Aus EP-A-0 040 054 ist das Verzinken von Gusseisen durch Aufsprühen von heißen geschmolzenen Zinkpartikeln in einem Strahl und anschließendes Walzen für das Verzinken von Bremsscheiben bekannt.

EP-A-0 024 949 offenbart ebenfalls eine Sprühverzinkung von Metall mit Hilfe von geschmolzenem Zink.

EP-A-0 545 049 beschreibt die Zink-Beschichtung eines Eisen-Basismaterials durch Eintauchen in ein Bad aus geschmolzenem Zink und dann die weitere Beschichtung mit einer Al-SN-Si-Legierung, ebenfalls durch Eintauchen.

Gemäß US 5,855,674 kann ein Tauchbad aus geschmolzenem Zink durch eine Sprühapparatur zum kontinuierlichen Verzinken linearer Elemente mit Zinkschmelze vermieden werden,

US 5,283,131 offenbart ein zink-plattiertes metallisches Material, z.B. aus Stahl, das auf der Zinkplattierung eine Schicht aus Magnesiumoxid und/oder -hydroxid und Chromoxid und/oder -hydroxid aufweist.

WO 2004/009869 offenbart die aufeinanderfolgende Anwendung von zwei wässrigen Elektrolytlösungen zum Verzinken von u.a. Gusseisen, wobei die erste Lösung eine Zink-Vorläuferverbindung enthält und die zweite ein Reduktionsmittel, um das Zink direkt auf dem Gusseisen abzuscheiden.

US-A 2005/0079286 offenbart das Aufbringen von Metallbeschichtungen auf Oberflächen durch Erwärmen der Oberfläche und Besprühen der Oberfläche zunächst mit einem Abrasivstoff und dann mit Metallpulver mittels eines Ultraschall-Strahls.

Die genannten Verfahren sind aber generell sehr teuer, da sie energieaufwendig sind und/oder mehrere Schritte erfordern , und liefern keine vollständig befriedigenden Ergebnisse. Einige der Verfahren sind auch für Schwenklager nicht geeignet, da sie für derartig komplex geformte Bauteile nicht einsetzbar sind, wenn sie nämlich z.B. einen Walzschritt umfassen.

An die Zink-Beschichtung von Schwenklagern werden besonders hohe Anforderungen gestellt. So soll das Auftreten von Rotrost an den Sacklöchern und/oder Bohrungen und/oder Gewinden vermieden werden, es darf an der gesamten Verzinkung kein Weißrost auftreten, und die Verzinkung soll optisch gleichmäßig sein und durchgängig einen metallischen Glanz aufweisen. Zudem soll das Verfahren zum Verzinken besonders ökonomisch sein.

Auf diesem Hintergrund war die Aufgabe der Erfindung die Bereitstellung von verzinkten Schwenklagern, die die genannten Anforderungen erfüllen, sowie die Bereitstellung eines Herstellungsverfahrens dafür,

Diese Aufgabe wird gelöst durch das Schwenklager gemäss Anspruch 1. Bevorzugte Ausführungsformen sind in den Ansprüchen 2 bis 9 definiert. Weiter wird die Aufgabe gelöst durch Herstellungsverfahren nach Anspruch 10, dessen bevorzugte Ausführungsformen in den Ansprüchen 11 bis 16 angegeben sind.

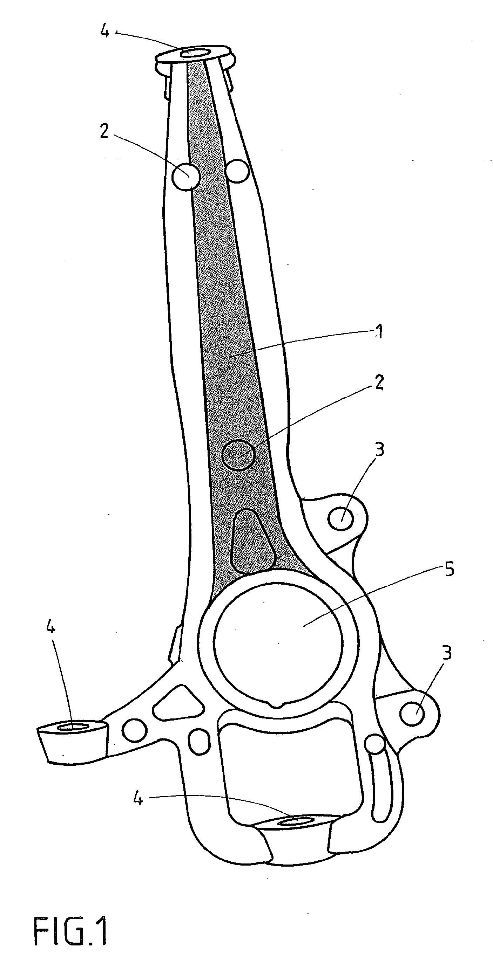

Figur 1 ist eine Draufsicht eines erfindungsgemäßen Schwenklagers, (1) bezeichnet dabei den durch Nachstrahlen in Schritt c) bearbeiteten Bereich. (2) bezeichnet Sacklöcher, (3) bezeichnet Gewindebohrungen, (4) Kegelbohrungen und (5) die Radlagerbohrung. Auf der Rückseite des Schwenklagers (nicht in der Figur dargestellt) befinden sich weitere 3 Sacklöcher,

Durch das erfindungsgemäße Verfahren ist es überraschenderweise erstmals möglich, auf einfache Weise verzinkte Schwenklager herzustellen, deren Zinkbeschichtung im wesentlichen kristallin ist. Das Verfahren beinhaltet eine neue Kombination von Schritten, so dass das genannte Ergebnis erzielt wird. Dabei liegt das Neue und Erfinderische des Verfahrens in der Kombination der Vorbehandlung des Gussteils mittels Nachstrahlen mit einem bestimmten Strahlmittel, anschließendem mechanischem Bearbeiten durch Vorsehen der Sacklöcher, Bohrungen und/oder Gewinde, saurem Verzinken und ggf. Nachbehandlung mittels Passivierung und Versiegelung.

Das erfindungsgemäße Schwenklager weist eine gleichmäßige Verzinkung mit durchgängig silbrig-metallischem Glanz auf und zeigt keine graue/amorphe Abscheidung oder unbeschichtete Stellen sowie keinen Rotrost oder Weißrost.

Das Schwenklager wird aus Grauguss (Gusseisen) durch übliches Gießen hergestellt. Z.B. ist der Werkstoff EN1563-GJS-400-15U geeignet. Die Graphitausbildung dieses Werkstoffs nach DIN EN ISO-945 beträgt ≥ 90%, Form V und VI, der Perlitanteil maximal 20%. Diese Material kann nur mit einem sauren Elektrolyten verzinkt werden.

Nach dem Gießen erfolgt gegebenenfalls eine übliche Nachbehandlung des Gussteils wie z.B. Reinigungs-Sandstrahlen und/oder Entgraten bzw. Entfernen der Angüsse mit üblichen Verfahren.

Bevorzugt wird der Gussrohling anschließend mit einem metallischen Strahlmittel komplett gestrahlt, um Sandrückstände zu entfernen, die Oberfläche zu säubern und gleichzeitig zu verdichten und ggf. vorhandene Risse und Poren zuzustrahlen. Dies führt dazu, dass die Oberfläche eine geringere Rauheit aufweist und die später darauf abgeschiedene Verzinkung bessere Korrosionseigenschaften zeigt, Als Strahlmittel ist z.B. Stahl geeignet, bevorzugt wird Stahl mit einer Korngröße von z.B. > 0,4 mm eingesetzt, der Überdeckungsgrad ist bevorzugt > 98 % und die Abwurfgeschwindigkeit ca, 60 m/sec,

Dann erfolgt das Nachstrahlen des ausgewählten Teilbereichs des Gussteils, der durch (1) in der beigefügten Figur bezeichnet ist. Dieser Teilbereich umfasst eine entlang der Längsachse des Lagers verlaufende im wesentlichen im Querschnitt halbrunde Vertiefung, die gestrahlt wird. Das Nachstrahlen erfolgt mit einem mineralischen kantigen Strahlmittel, z.B. bevorzugt einem Gemisch aus Glas- oder Keramikpartikeln gemeinsam mit einem nichtmetallischen Strahlmittel, bevorzugt Kupferschlacke oder Korund. Die Partikel sind bevorzugt Glaspartikel, wiederum bevorzugt Glasbruch. Der Partikeldurchmesser beträgt 0,2 bis 1 mm, bevorzugt < 0,5 mm, insbesondere≤ 0,4 mm. Das Strahlen wird bei einem Druck von 5 bis 12 bar, bevorzugt 8 bis 10 bar mit einem Überdeckungsgrad ≥ 98% durchgeführt. Ohne dieses partielle Nachstrahlen oder bei Verwendung anderer Strahlmittel, z.B. Stahlkörner, Drahtkorn oder ähnliches, weist die anschließend erhaltene Zinkschicht nicht den erfindungsgemäß erzielten im wesentlichen kristallinen Aufbau auf, der anhand des durchgängig metallisch glänzenden Aussehens der Verzinkung erkennbar ist, sondern zeigt deutlich sichtbare großflächige dunkle matte amorphe Bereiche,

Das partielle Nachstrahlen wird so durchgeführt, dass das solcherart erhaltene Schwenklager eine Oberflächenrauhigkeit von Rz 40-60 µm aufweist, gemessen durch ein übliches Rauheitsmessgerät, z.B. Mitutoyo Surftest 201 .

Der Begriff "im wesentlichen kristallin" bedeutet dabei erfindungsgemäß, dass bei Betrachtung mit dem bloßen Auge die gesamte Oberfläche des verzinkten Schwenklagers einen gleichmäßigen silbrigen Metallglanz aufweist und keine dunklen matten amorphen Bereiche zu erkennen sind.

Die Kristallinität lässt sich gut mit Hilfe eines Raster-Elektronen-Mikroskops feststellen. (s, z.B. http:///www.surtec.com/Publikationen/HL-Additive.pdf#search=%22kristalline%20Zinkschichten%22).

Falls das Schwenklager nicht erfindungsgemäß partiell nachgestrahlt wird, kann bei der anschließenden Verzinkung der Bereich (1) nicht so verzinkt werden, dass eine kristalline Zinkbeschichtung erhalten wird, sondern es werden im Bereich (1) lediglich amorphe Beschichtungen erhalten.

Eine im wesentlichen kristalline Zinkbeschichtung auch im Bereich (1) könnte möglicherweise ohne das partielle Nachstrahlen erzielt werden, wenn beim Galvanisieren eine an den Bereich (1) angepasste Hilfsanode verwendet würde. Dies Verfahren wäre jedoch sehr zeitaufwendig, teuer und schwierig durchzuführen, da die Hilfsanode jeweils sehr genau platziert werden müsste. Daher ist diese Alternative nachteilig und nicht wünschenswert.

Im Anschluss an das partielle Nachstrahlen oder besonders bevorzugt das vollständige Strahlen mit Stahlkörnen und das partielle Nachstrahlen werden die gewünschten Sacklöcher, Bohrungen und/oder Gewindebohrungen auf übliche Weise durch mechanisches Bearbeiten wie z.B. Bohren, Fräsen oder Drehen hergestellt.

Anschließend erfolgt das saure Verzinken.

Alle oder auch nur einige der Schritte (i) bis (v), sowie bevorzugt das saure Verzinken selbst, werden erfindungsgemäß bevorzugt durchgeführt, indem die Schwenklager auf Spezialgestelle platziert werden, die so ausgestaltet sind, dass Abschirmungen aus z.B. Stahlblech, ggf, auch gelochtem Stahlblech, oder einem anderen geeigneten Werkstoff in einem geeignet gewählten Abstand vor besonders hervortretenden Bereichen der Lager und/oder im Bereich der Bohrungen angeordnet sind, um eine zu hohe Schichtdickenabscheidung bzw. Verzinkung der Bohrungen zu vermeiden und eine ausreichende Schichtdicke in Bereichen mit geringer Stromdichte zu erzielen. Es ist besonders bevorzugt, die Gewindebohrungen und/oder konischen Bohrungen durch eingesteckte Metallbolzen abzuschirmen, die vor dem Verzinken in bzw. durch die Bohrungen geführt werden.

Durch diese Abschirmtechnik ist es möglich, die Schichtdicke der Verzinkung innerhalb sehr enger, vorher festgelegter Toleranzbereiche einzustellen. Dies ist für die Funktionsfähigkeit des Endprodukts von großer Bedeutung.

Die Gestelle werden dann ggf, von Behandlungsbad zu Behandlungsbad transportiert.

Zunächst wird das wie beschrieben vorbehandelte Lager auf übliche, dem Fachmann bekannte Art und Weise in Schritt (i) entfettet, falls gewünscht. Dies kann in einem oder mehreren Schritten, ggf. mit verschiedenen Entfettern erfolgen. Als Entfetter sind organische Lösungsmittel, insbesondere Benzin, Benzol, Terpentinöl, Decalin, Hexalin, Tetralin, Trichlorethylen, Tertochlorkohlenstoff, Perchlorethylen, Dipenten usw., wässrige Lösungsmittel, z,B, Natriumhydroxidlösung, Kaliumhydroxidlösung, Sodalösung, Wasser, oder z.B, Pflanzenöl-Ester geeignet, Derartige Entfetter sind auch unter der Bezeichnung "Industriereiniger" am Markt verfügbar, Organische Lösungsmittel sind wegen der Explosionsgefahr und der Giftigkeit dafür nicht bevorzugt und im Bereich der Massenveredlung äußerst unüblich. Die geeigneten Entfetter und die Bedingungen der Entfettung werden vom Fachmann geeignet ausgewählt. Es können auch mehrere Entfetter in Kombination gleichzeitig oder nacheinander eingesetzt werden. Z.B. kann der Temperaturbereich von Raumtemperatur bis 200 °C, bevorzugt 50 bis 100 °C, besonders bevorzugt 70 bis 90 °C betragen. Die Zeit kann z.B. zwischen 2 und 10 Minuten liegen, bevorzugt 3 bis 7 Minuten, besonders bevorzugt 4 bis 6 Minuten. Der pH beträgt ca. 10 bis 14, bevorzugt ca. 11 bis 13, besonders bevorzugt ca. 12 bis 13. Das Entfetten kann z.B. durch Eintauchen oder Besprühen oder Abwischen erfolgen und wird vom Fachmann geeignet ausgewählt, bevorzugt erfolgt es durch Eintauchen. Z.B erfolgt das Entfetten mit alkalischen Heißentfettern wie Natriumhydroxid-Lösung, Entfetter E3342 der Fa. Bechem bei einer Temperatur von ca, 70 °C, und in einem zweiten Schritt durch elektrolytische alkalische Heißentfettung mit Gleichstrom, z,B, mit Entfetter E 3379 der Fa. Bechem und P3 Emalan^{®} 0470 der Fa. Henkel jeweils während ca. 4,5 Minuten bei ca. 76°C bei ca. pH ≥ 12. Das Entfetten wird so durchgeführt, dass die Oberfläche des Lagers anschließend ausreichend fettfrei ist, um eine einwandfrei Zinkbeschichtung zu erzielen.

Weiter wird das Lager in Schritt (i) ggf, gebeizt, falls notwendig und/oder gewünscht. Das Beizen erfolgt im allgemeinen durch Anätzen, im allgemeinen mittels Säuren oder Laugen, Der Vorgang wird unter anderem eingesetzt, um eine oxidfreie Oberfläche zu bekommen, sowie zur Entfernung von Entfetter-Rückständen, Als Beizmittel wird erfindungsgemäß bevorzugt inhibierte Salzsäure eingesetzt. Das Beizmittel und die Bedingungen werden vom Fachmann aus den üblichen bekannten Mitteln und Bedingungen geeignet ausgewählt, Das Beizen erfolgt z.B. in einem Tauchbad bei Raumtemperatur mit einem Salzsäure-Bad bei pH ≤ 2 während ca. 9 Minuten.

Zwischen den einzelnen Schritten kann nach Bedarf mit Wasser in verschiedenen Reinheitsgraden gespült werden. Dass Wasser wird dabei bevorzugt in Kaskadentechnik geführt.

Im Anschluss kann je nach Bedarf ggf. eine elektrolytische Entfettung erfolgen, ebenfalls unter dem Fachmann bekannten Bedingungen. Es kann z.B. der Entfetter E51 und Natriumhydroxidlösung verwendet werden. Die Elektrolyse erfolgt z.B. anodisch bei 2000 bis 3000 A, bevorzugt ca. 2500 A, während 1 bis 5 Minuten, bevorzugt 2 bis 4 Minuten, besonders bevorzugt ca, 2,5 Minuten, bei einer Temperatur von Raumtemperatur bis 100 °C, bevorzugt 40 bis 70 °C, besonders bevorzugt ca, 60 °C.

Nach der Entfettung weist die Metalloberfläche i.a. noch Alkali-Rückstände auf, Darüber hinaus bilden sich in der Entfettungslösung Metalloxide und/oder -oxyhydrate. Deshalb wird erfindungsgemäß zwischen Entfettung und dem eigentlichen Verzinken bevorzugt eine Dekapierung durchgeführt, d.h. ein saures Spülbad, in welchem eine Umwandlung dieser unlöslichen in lösliche Verbindungen erfolgt. Das Ergebnis ist eine reine, aktivierte und optimal auf die nachfolgende Verzinkung vorbereitete Oberfläche. Auch beim Dekapieren ist es primäres Ziel des Prozesses, störende Oxidschichten vor dem Beschichtungsprozess von der Metalloberfläche zu entfernen und eine aktive Oberfläche zu erzeugen, Daher wird dieser Prozessschritt häufig auch als Aktivieren bezeichnet. Mit dem Dekapieren können nur dünne Oxid- oder Anlaufschichten von der Metalloberfläche entfernt werden. Hierzu werden stark verdünnte Mineralsäuren oder aktivierende saure Lösungen verwendet. Das Dekapieren wird insbesondere nach vorangegangener Behandlung in einem alkalischen Medium (z. B. alkalisches Entfettungsbad) zur Entfernung alkalischer Restrückstände und Aktivierung der Metalloberfläche für den eigentlichen Beschichtungsprozess eingesetzt. Der Fachmann wählt die geeigneten Lösungen und Bedingungen aus, z.B. eine wässrige Lösung von Dekapierungssalz DICO Pictax der Fa. Dico. Als Dekapierungslösung wird z.B. Natriumhydrogendifluoridlösung mit einer Konzentration von maximal 7 Gew.% eingesetzt. Das Dekapieren wird erfindungsgemäß bei Raumtemperatur bis 100 °C, bevorzugt bei Raumtemperatur, während einer Zeit von 5 bis 60 sec, bevorzugt > 10 sec, bei einem pH von ca, 1 bis 2 durchgeführt.

Anschließend erfolgt das eigentliche saure Verzinken. Als Anode werden Zinkplatten oder -stäbe eingesetzt, die bei dem Prozess in die lösliche Zinksalzform überführt werden. Zum Verzinken werden wässrige saure Zinklösungen eingesetzt, die der Fachmann geeignet auswählt, Z.B kann eine wässrige Lösung eingesetzt werden, welche Zinkchlorid, Kaliumchlorid (Leitsalz), Borsäure (Puffer) und Salzsäure enthält. Es können auch andere Zinksalze, Leitsalze und Puffer eingesetzt werden. Das Schwenklager wird als Kathode geschaltet; im Gleichstrom scheidet sich dann bei einer anlagenspezifisch ausgewählten Stromstärke von etwa 250 bis 600 A eine feinkristalline Zinkschicht auf der Oberfläche ab. Weiter enthält die Verzinkungslösung Glanzzusätze und Tenside, die der Fachmann aus den bekannten Mitteln geeignet auswählt, Diese Glanzzusätze sind polare Substanzen, die sich auf der Oberfläche anlagern und dort das Kristallwachstum hemmen und so sehr feinkristalline Strukturen erzeugen. Im schwachsauren Elektrolyten werden zusätzlich Tenside benötigt, die die Oberfläche benetzen und die Glanzzusätze emulgieren.

Der pH bei der Verzinkung wird schwach sauer gewählt, bevorzugt zwischen 2 und 6, besonders bevorzugt zwischen 4,5 und 5,5, insbesondere ca. 5,2. Die Dauer und die Temperatur der Verzinkung werden vom Fachmann geeignet ausgewählt, z.B. wird während 20 bis 90 Minuten, bevorzugt 40 bis 70 Minuten, besonders bevorzugt ca. 60 Minuten bei 20 bis 40 °C, bevorzugt 25 bis 35 °C, besonders bevorzugt ca. 28 °C galvanisiert. Das Bad kann dabei ggf. kontinuierlich umgewälzt und/oder filtriert werden. Das Galvanisieren wird so lange fortgesetzt, bis die gewünschte Schichtdicke erreicht ist, die erfindungsgemäß mindestens ca, 12 µm beträgt.

Dann erfolgt bevorzugt eine Passivierung der erzielten Oberfläche in Schritt (iii). Die Passivierung bedeutet das Aufbringen einer zusätzlichen, sehr dünnen Chrom(III) umfassenden Schicht. Diese Passivierung genannte Schicht ist eine Konversionsschicht, die durch Reaktion der Zinkoberfläche mit einem Chrom(III)-haltigen Bad entsteht. Sie kann den direkten Korrosionsangriff auf die darunter liegende Zinkschicht stark verzögern. Daneben gibt es auch Chromatierungen, die sich durch das Vorliegen von Cr(VI) auszeichnen. Nach ihrer Farbe wird die Chromatierung Blau-, Gelb-, Schwarz- oder Olivchromatierung genannt (Dickschichtpassivierung wird auch des öfteren Transparentpassivierung genannt). Die Olivchromatierung hat die stärkste Korrosionsschutzwirkung, weil sie wie andere Chrom(VI)-haltige Chromatierungen bei mechanischen Verletzungen einen gewissen "Selbstheilungseffekt" hat. Es werden bereits galvanisch verzinkte Schwenklager in eine Lösung getaucht, die Chromverbindungen enthält. Es handelt sich um eine Nachbehandlung, Zink ist ein relativ unedles Metall, das ohne diese Behandlung schnell korrodieren würde. Die meisten Verfahren sind auf Cr-VI-Basis und werden auch als Chromatierung im eigentlichen Sinn bezeichnet. Seit längerer Zeit gibt es auch Cr(III)-haltige Passivierungen, meist für Blaupassivierungen. Seit Anfang 2004 gibt es auch Gelb- und Schwarzpassivierungen und Dickschichtpssivierungen auf Cr(III)-Basis, da die Automobilindustrie wegen der Altautoverordnung kein Cr(VI) mehr akzeptiert, Der Fachmann wählt aus den bekannten Chromatierungsmittein die geeigneten aus. Erfindungsgemäß bevorzugt ist die Anwendung von Cr(III)-Possivierungsmitteln, die Nanopartikel wie z.B. Silikat-Nanopartikel enthalten, wie z.B. Lanthane^{®} TR 175 der Fa. Coventya. Die Verwendung solcher Nanopartikel-haltiger Passivierungen führen zu einem verbesserten Korrosionsschutz, da bei Verletzungen der Oberfläche die Nanopartikel durch Diffusion an die beschädigten Stellen wandern und dadurch einen "Selbstheilungseffekt" bewirken. Die Bedingungen für die Passivierung werden geeignet ausgewählt und können z.B. Temperaturen von Raumtemperatur bis ca. 50 °C, bevorzugt ca. 25 °C, Zeiten von 10 Sekunden bis 5 Minuten, bevorzugt 1 bis 2 Minuten und einen pH von 1 bis 4, bevorzugt ca, 2 umfassen. Die Passivierung erfolgt erfindungsgemäß bevorzugt als Dickschichtpassivierung, wobei die Schichtdicke bevorzugt ca, 500 nm beträgt,

Im Anschluss an die Passivierung erfolgt ggf. je nach Bedarf in Schritt (iv) eine Versiegelung mit einem geeignet ausgewählten Versiegelungsmittel, z.B. wässrigen alkalischen Wachs-Acrylat-Lösungen bei alkalischem pH, der beispielsweise mit Ammoniak eingestellt wird, z.B. Hessotop^{®} C der Fa, Dr. Hesse. Die erhaltene Versiegelung wird auch als TopCoat bezeichnet und ist für passivierte Cr(III)-haltige Beschichtungen erforderlich, um diesen eine ausreichende Korrosionsbeständigkeit zu verleihen. Die Bedingungen für die Versiegelung werden vom Fachmann geeignet ausgewählt und umfassen z.B. eine Dauer von 1 bis 60 Sekunden, bevorzugt ca. 10 Sekunden, eine Temperatur von Raumtemperatur bis ca. 50 °C, bevorzugt Raumtemperatur, und einen pH-Wert von ca. 7 bis 12, bevorzugt ca. 8 bis 10, besonders bevorzugt 9 bis 10.

Das so erhaltene beschichtete Schwenklager wird anschließend bevorzugt getrocknet, z,B, mit Warmluft bei einer Temperatur von 50 bis 80°C während ca. 1 bis 15 Minuten, bevorzugt ca, 10 Minuten.

Bevorzugt werden vor der Durchführung der einzelnen Verfahrensschritte alle oder einige Sacklöcher, Bohrungen und/oder Gewindebohrungen auf geeignete Weise in Schritt e) flüssigkeitsdicht abgestopft, um Kontakt der Innenflächen mit den verschiedenen Behandlungslösungen zu vermeiden, Dafür können übliche Stopfen, insbesondere deren Materialien und Formen, geeignet ausgewählt werden. Als günstig erwiesen haben sich für die Sacklöcher (2) Schrauben mit Dichtungen, bevorzugt Teflondichtungen. Für Kegelbohrungen (3) werden bevorzugt Spreizstopfen aus Gummi verwendet, die sich nach dem Einsetzen ausdehnen und so die Bohrungen abdichten. Die Bohrung (4) für den ABS-Sensor wird bevorzugt mit einem konischen Silikongummistopfen versehen, und für die Gewinde werden günstigerweise konische Hohlstopfen z.B. aus Gummi verwendet.

Für das Abstopfen der Radlagerbohrung wird bevorzugt ein speziell entwickelter Stopfen verwendet, der aus einem zylindrischen Inlett, bevorzugt aus Polyamid, mindestens einer Dichtungsscheibe, bevorzugt aus Silikon, deren Durchmesser jeweils ca. 1 mm kleiner ist als der Innendurchmesser der Radlagerbohrung, und mindestens einer Außenscheibe aus Metall, bevorzugt Stahl besteht. Die Dichtungsscheibe(n) ist/sind zwischen Inlett und Metallscheibe(n) angeordnet. Bevorzugt weist der Stopfen zwei Dichtungsscheiben und zwei Metallscheiben auf, die an entgegengesetzten Stirnflächen des zylindrischen Inlettes angeordnet sind. Auf jeder Metallscheibe befindet sich jeweils auf der der Dichtungsscheibe zugewandten Seite mindestens eine konzentrische Erhöhung, bevorzugt zwei konzentrische Erhöhungen, von denen sich wiederum bevorzugt eine benachbart zum Außenrand der Scheibe bzw. der Inletts und eine benachbart zur Innenbohrung der Scheibe bzw. des Zylinders befindet. Auf dem Inlett befindet sich jeweils eine bzw. zwei konzentrische kreisförmige Rillen, die so angeordnet sind, dass beim Zusammenfügen der Einzelteile des Stopfens die Erhöhungen in die Rillen greifen. Erfindungsgemäß kann sich auch die Erhöhung auf dem lnlette und die Rille auf der Metallscheibe befinden. Entlang der Längsachse des Inletts und in der Mitte jeder Scheibe befindet sich eine Bohrung, durch die eine Flügelschraube eingeführt wird. Dieser Stopfen ist ebenfalls Gegenstand der Erfindung. Durch das Zusammenpressen der Einzelteile beim Abstopfen wird/werden die Dichtungsscheibe(n), die genau der Innenkontur der Radlagerbohrung angepasst ist/sind, gegen die Innenwand gedrückt und dichten die Radlagerbohrung (5) so flüssigkeitsdicht ab.

Noch weiter bevorzugt, weil einfacher einzusetzen und zu entfernen, ist ein speziell an die Radlagerbohrung angepasster Deckel aus Metall, der in der Bohrung festgesteckt wird. Der Deckel weist Abstandshalter auf, die ein gezieltes Einstreuen von Zink in die Bohrung ermöglichen. Durch das gezielte Einstreuen von Zink erhalten die Bohrungen einen temporären Korrosionsschutz und brauchen dann nicht anschließend gesäubert und konserviert zu werden.

Bei einer besonders bevorzugten Variante der erfindungsgemäßen Verfahrens werden nur die Sacklöcher flüssigkeitsdicht abgestopft wie oben beschrieben. Die Bohrungen und Gewindebohrungen werden durch die vorstehend beschriebene Abschirmung durch Einstreuen von Zink partiell beschichtet, so dass die nachfolgende Konservierung entfallen kann. Bei dem erhaltenen verzinkten Schwenklager sind dann die Sacklöcher nicht verzinkt und die Bohrungen und Gewinde partiell verzinkt.

Beim erhaltenen Lager werden anschließend ggf. die Stopfen bzw. Deckel und/oder Abschirmungsbolzen entfernt. Anschließend werden die Bohrungen, Sacklöcher und/oder Gewindebohrungen, falls notwendig, ausgewischt und mit Druckluft getrocknet. Die unbehandelten, nicht beschichteten Flächen werden anschließend, falls gewünscht, mit einem Konservierungsmittel behandelt, z.B. mit einem Korrosionsschutz-Öl wie Castrol, Additiv K51 der Fa. Bechem, Seleka Fluid KS116, oder Anticorit RP 4107 der Firma FUCHS PETROLUB, indem die zu behandelnden Partien z.B. eingepinselt werden. Das überschüssige Öl kann anschließend, falls gewünscht, durch Druckluft ausgeblasen werden. Diese Schritte können entfallen, wenn das Verzinken unter Verwendung des vorstehend genannten Deckels erfolgte, der das gezielte Einstreuen von Zink in die Bohrungen ermöglicht.

Das erhaltenen verzinkte Schwenklager zeigt eine sehr gute Korrosionsbeständigkeit. Es wird nach 168 Stunden keine Weißrostbildung im Salzsprühtest nach DIN 500021 SS beobachtet. Es erfolgt keine nachträgliche Unterkorrosion, da ein saures Verzinkungsverfahren angewendet wird, und die erhaltenen verzinkten Oberflächen zeigen keine Ausblühungen. Die unbeschichteten, konservierten Bereiche bleiben bis zur Montage beim Autohersteller frei von Korrosion. Die weitaus teureren Legierungsbeschichtungen (Zink-Nickel oder Zink-Eisen) können vermieden werden.

## Patentansprüche

1. Schwenklager für Automobil-Vorderradaufhängungen, bestehend aus verzinktem Grauguss, welches Sacklöcher, Bohrungen und/oder Gewindebohrungen aufweist, **dadurch gekennzeichnet, dass** die Zink-Beschichtung im wesentlichen kristallin ist.

2. Schwenklager nach Anspruch 1, wobei die Innenoberfläche der im Lager vorgesehenen Sacklöcher, Bohrungen und/oder Gewindebohrungen nicht verzinkt ist.

3. Schwenklager nach Anspruch 1 oder 2, wobei die Zinkoberfläche passiviert und versiegelt ist.

4. Schwenklager nach Anspruch 3, wobei die Passivierung Nanopartikel umfasst.

5. Schwenklager nach einem oder mehreren der Ansprüche 1 bis 4, erhältlich durch ein Verfahren mit den folgenden Schritten:
a) Bereitstellung eines Grausgussteils,
b) Nachstrahlen eines ausgewählten Bereichs mit einem mineralischen kantigen Strahlmittel,
c) Bohren, Fräsen und/oder Gewindeschneiden
d) saures Verzinken, welches ggf. darüber hinaus einen oder mehrere der folgenden Schritte umfasst:
(i) einfach oder mehrfach Entfetten und/oder Beizen
(ii) Dekapieren
(iii) Passivieren
(iv) Versiegeln
(v) Trocknen,
wobei die Reihenfolge der Schritte b) und c) vertauscht werden kann.

6. Schwenklager nach Anspruch 5, wobei das Verfahren darüber hinaus folgende Schritte aufweist:
e) flüssigkeitsdichtes Abstopfen einiger oder aller Löcher, Bohrungen und/oder Gewindebohrungen
f) Entfernen der Stopfen, wobei Schritt e) zwischen den Schritten c) und d) durchgeführt wird und Schritt f) nach Schritt d).

7. Schwenklager nach Anspruch 6, wobei das Verfahren darüber hinaus folgenden Schritt umfasst:
g) Konservieren der unverzinkten Innenoberflächen der Bohrungen und/oder Gewindebohrungen, wobei Schritt g) nach Schritt f) durchgeführt wird,

8. Schwenklager nach Anspruch 3 oder 5 bis 7, wobei die Passivierung Nanopartikel umfasst, bevorzugt solche, die diffusionsfähige Silikate umfassen.

9. Schwenklager nach einem oder mehreren der Ansprüche 5 bis 8, wobei das Graugussteil erhalten wird durch Gießen eines Rohlings aus Grauguss, Entfernen der Angüsse und Säuberungsstrahlen,

10. Verfahren zur Herstellung eines Schwenklagers für Autobil-Vorderradaufhängungen, umfassend die folgenden Schritten:
a) Bereitstellung eines Grausgussteils,
b) Nachstrahlen eines ausgewählten Bereichs mit einem mineralischen kantigen Strahlmittel,
c) Bohren, Fräsen und/oder Gewindeschneiden
d) saures Verzinken, welches ggf. darüber hinaus einen oder mehrere der folgenden Schritte umfasst:
(i) einfach oder mehrfach Entfetten und/oder Beizen
(ii) Dekapieren
(iii) Passivieren
(iv) Versiegeln
(v) Trocknen,
wobei die Reihenfolge der Schritte b) und c) vertauscht werden kann.

11. Verfahren nach Anspruch 10, welches darüber hinaus folgende Schritte aufweist:
e) flüssigkeitsdichtes Abstopfen einiger oder aller Löcher, Bohrungen und/oder Gewindebohrungen
f) Entfernen der Stopfen, wobei Schritt e) zwischen den Schritten c) und d) durchgeführt wird und Schritt f) nach Schritt d).

12. Verfahren nach Anspruch 11, welches darüber hinaus folgenden Schritt umfasst:
g) Konservieren der unverzinkten Innenoberflächen der Bohrungen und/oder Gewindebohrungen, wobei Schritt g) nach Schritt f) durchgeführt wird.

13. Verfahren nach Anspruch 10 oder 11 bis 13, wobei die Passivierung Nanopartikel umfasst, bevorzugt solche, die diffusionsfähige Silikate umfassen,

14. Verfahren nach einem oder mehrern der Ansprüche 10 bis 13, **dadurch gekennzeichnet, dass** beim sauren Verzinken (Schritt d)) geeignete Abschirmungen vorgesehen werden.

15. Verfahren nach Anspruch 14, wobei die Abschirmungen ausgewählt werden aus Metallblechen, Metall-Lochblechen und Metallbolzen.

16. Verfahren nach einem oder mehreren der Ansprüche 10 bis 15, wobei das Graugussteil erhalten wird durch Gießen eines Rohlings aus Grauguss, Entfernen der Angüsse und Säuberungsstrahlen.

17. Stopfen mit einem zylindrischen Inlett, einer Dichtungsscheibe, deren Durchmesser ca. 1mm kleiner ist als der Innendurchmesser der abzudichtenden Bohrung, und einer Außenscheibe aus Metall, wobei die Dichtungsscheibe zwischen Inlett und Metallscheibe angeordnet ist, wobei sich auf der Metallscheibe mindestens eine konzentrische schmale Erhöhung und auf dem Inlett mindestens eine konzentrische Rille jeweils auf der der Dichtungsscheibe zugewandten Seite befindet/n, derartig, dass beim Zusammenfügen der Einzelteile die Erhöhung und die Rille ineinander greifen, und sich entlang der Längsachse des Inletts und in der Mitte jeder Scheibe eine Bohrung befindet, durch die eine Flügelschraube eingeführt werden kann.

18. Stopfen nach Anspruch 17, welcher zwei Dichtungsscheiben und zwei Metallscheiben, jeweils wie in Anspruch 17 definiert, aufweist, die an beiden Stirnflächen des zylindrischen Inletts angeordnet sind.

19. Stopfen nach Anspruch 18, wobei eine Rille bzw, Erhöhung benachbart zum Außenrand der Scheiben und die zweite Rille bzw. Erhöhung benachbart zur Bohrung befinden.
